# EUROPEAN PATENT SPECIFICATION

(11) **EP 0 343 572 B1**
(45) Date of publication and mention of the grant of the patent: **02.10.1996**
(21) Application number: 89109201.7
(22) Date of filing: 22.05.1989
(51) Int. Cl.: C08G 64/00, C08G 18/44

(54) **Polycarbonatediol composition and polyurethane resin**
Polycarbonatdiolzusammensetzung und Polyurethankunststoff
Composition de diol de polycarbonate et résine de polyuréthane

(30) Priority: 26.05.1988 JP 127083/88; 09.12.1988 JP 311452/88
(43) Date of publication of application: 29.11.1989
(73) Proprietor: DAICEL CHEMICAL INDUSTRIES, LTD., Sakai-shi Osaka-fu 590 (JP)
(72) Inventor: Murai, Takaaki, Otake Hiroshima (JP); Fujii, Tatsumi, Otake Hiroshima (JP)
(74) Representative: Hansen, Bernd, Dr.rer.nat.

(56) References cited:
- EP-A- 0 299 068
- DE-A- 2 001 091
- DE-A- 2 446 107
- DE-A- 2 714 303
- DE-B- 1 694 080
- US-A- 4 533 729

## Description

The present invention relates to a novel polycarbonatediol composition being liquid at room temperature because its crystallinity is disordered owing to random structures. This composition is composed of 1,6-hexanediol and at least one diol having at least one side chain The composition, has an excellent processability for preparing e.g. a polyurethane resin.

Furthermore, the present invention relates to a polyurethane resin prepared by reaction of an organic diisocyanate compound with the polycarbonatediol composition.

Hitherto, the polyurethane resins are used in many different forms, such as foams, adhesives, fibers, elastomers and paints.

They are prepared mainly by a reaction of an organic diisocyanate compound with polyol compounds.

The polyol compounds include polyether polyols such as polypropylene glycols, polytetra methylene glycols, polyester polyols which are derived from divalent carboxylic acids such as adipic acid and polyhydric alcohols and polylactone polyols which are obtained by reaction of lactones with alcohols.

Many polyol compounds have been, used to produce a polyurethane resin which may be used for different purposes.

However, as polyether polyols have ether bonds, the resulting urethane resin has the disadvantage that it has a poor heat resistibility and weatherability. The urethane resin which is produced by employing polyester or polylactone polyols has a poor water resistance because it has ester bonds.

The use of polyols having carbonate bonds has been proposed to produce novel urethane resin in order to overcome those disadvantages.

The polycarbonatepolyol which is used more widely than any other type of polyol compound, i.e. the polyol having a carbonate bond contains 1,6-hexanediol in the backbone as shown by formula (I) :

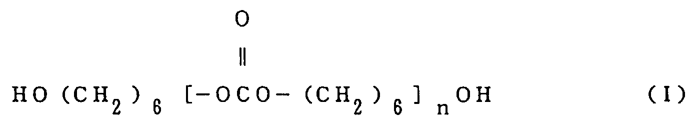

The polycarbanatediol having 1,6-hexanediol structures in a backbone can produce a poly urethane resin having a very good balance of various properties including mechanical strength and more excellent resistibility at elevated temperatures and in a humid atmosphere produced on an industrial basis.

The polycarbonatediols having 1,6-hexane diol structures in a backbone have a melting temperature range of 40 to 50°C. Therefore, it has a waxy consistence at ordinary temperature.

Accordingly, it must be melted before use as a raw material for manufacturing urethane resins necessitating the use of a tank for heating and melting.

The use of such a tank must prevent heat radiation from the surface of the tank and piping. Accordingly, this is disadvantageous, not only from the point of view of energy costs, but also in view of plant costs.

In order to overcome these disadvantages, a random copolymer composed of ε-caprolactone and dialkylcarbonate such as diethylcarbonate or dimethylcarbonate had been disclosed in Japanese Laid-Open Publication No. 115925/1985.

The random copolymer is a liquid polyol having a low melting temperature.

However, a polyurethane prepared with the randomly copolymerized polyol has a poor heat and humidity resistibility due to the presence of ε-caprolactone ester bonds in the molecule.

US-A-4,533,729 reveals a process for the preparation of polycarbonate polyols wherein phosgene is reacted with a branched-chain polyhydric alcohol having about 4 to 12 carbon atoms and about 3 to 40 mole %, based upon the total amount of polyhydric alcohol, of a straight-chain polyhydric alcohol having about 5 to 20 carbon atoms in the presence of a solvent and in the absence of a catalyst at a temperature of about 60 to 100°C.

DE-B-16 94 080 reveals a process for the preparation of polyurethane prepared by the transesterification of diarylcarbonate with 1,6-hexanediol, and the conversion of the resulting transesterification product with an organic polyisocyanate.

DE-A-27 14 303 includes a polycarbonatediol being prepared from an aliphatic diol and a carbonate, wherein the aliphatic diol represents a mixture of at least 30 mole % of a linear aliphatic diol and at least 10 mole % of a cycloaliphatic diol.

Finally, EP-A-0 299 068, representing prior art in accordance with Article 54(3) EPC, relates to a polycarbonate obtained by reacting carbonate with a mixed glycol consisting of 2-methyl-1,8-octanediol and an alkanediol such as 1,6-hexanediol. The above polycarbonate is used to produce a polyurethane.

It is therefore an object of the present invention to solve the above-mentioned problems and to produce polyurethanes of high mechanical strength and heat and humidity resistibility, as well as other improved properties.

The present invention provides a polycarbonatediol composition obtainable by reacting an aliphatic diol with an organic carbonate to form a carbonate moiety, characterized in that the aliphatic diol comprises a mixture of:
(i) 20 to 33.3 % by mole of at least one diol having a main chain including 3 to 20 carbon atoms and including at least one side chain, with the exception of 2-methyl-1,8-octane; and
(ii) 80 to 66.7 % by mole of 1,6-hexanediol.

Preferred features are contained in the sub-claims 2 to 7.

Furthermore, this invention is directed to a polyurethane resin as defined in claim 8.

The polycarbonatediol composition is liquid at ordinary temperature because its crystallinity is disordered owing to the random structures being composed of 1,6-hexanediol and diol having side chain.

The polycarbonatediol composition has an excellent processability, e.g. for preparing a polyurethane resin.

The polyurethane resin has excellent properties at low temperature while retaining high levels of mechanical strength and more excellent resistibility at elevated temperatures and in a humid atmosphere, thereby maintaining a good balance of properties.

The polyurethane resin is more useful in a very wide variety of forms, such as spandex, rigid or flexible urethane foams, thermoplastic urethane elastomers and thermosetting urethane elastomers, adhesives, synthetic leather and paints.

Alkylene carbonates include, e.g. ethylene carbonate, 1,2-propylene carbonate and 1,2-butylene carbonate.

Diaryl carbonates include diphenyl carbonate or dinaphtyl carbonate.

Dialkyl carbonates include dimethyl carbonate or diethyl carbonate.

Any of these compounds can react with a diol as defined herein.

Examples of the diols which may be employed include 1,2-propanediol, 1,3-butanediol, 2-methyl-1,3-propane diol, neopentylglycol, hydroxypivalate of neopentyl glycol, 2-methylpentanediol, 3-methylpentanediol, 2,2,4-trimethyl-1,6-hexanediol, 3,3,5-trimethyl-1,6-hexanediol or 2,3,5-trimethyl-1,6-pentanediol.

It is possible to use either one kind of said diol or a mixture of two or more of them.

If the mixture contains less than 20% by mole of the diol, the resulting polycarbonatediol composition has a higher melting temperature.

It is preferable to use dimethyl or diethyl carbonate.

A diol having less than 3 carbon atoms or more than 20 carbon atoms in the main chain cannot be produced on an industrial basis.

In the case that a dialkyl carbonate compound is used as a carbonate compound, the reaction for the preparation of the polycarbonatediol composition of the present invention is represented by the general formula: 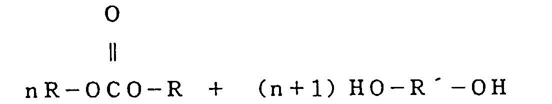 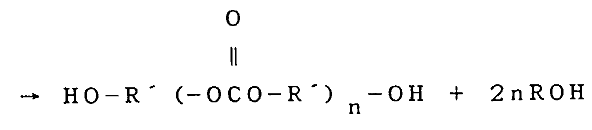 (wherein R is an alkyl group, and R' is an alkylene group)

The two kinds of diols which are used as the starting materials are incorporated into the molecule randomly by a carbonate bond.

If one of them is shown as HO-R¹-OH and the other as HO-R²-OH, the following groups: 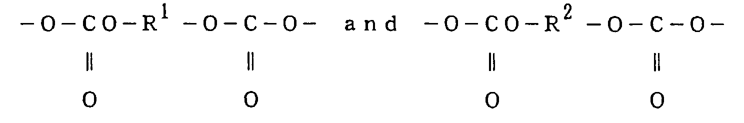 are present randomly in the molecule.

The random combination in the polycarbonate diol composition results in a disordered crystallinity so that a liquid polycarbonatediol composition is obtained. The crystallinity depends on 1,6-hexanediol structures.

A detailed description of the reaction process will now be made by using, for example, a dialkyl carbonate as a material to be reacted with the described aliphatic diol.

It is possible to employ any catalyst that is usually employed for an ester interchange reaction.

More specifically, it is possible to use, for example, a metal such a lithium, sodium, potassium, rubidium, cesium, magnesium, calcium, strontium, barium, zinc, aluminum, titanium, cobalt, germanium, tin, lead, antimony, arsenic, or cecium, or an alkoxide thereof.

Other examples of a preferred catalyst are alkali and alkaline earth metal carbonates, zinc borate, zinc oxide, lead silicate, lead carbonate, antimony trioxide, germanium dioxide, cerium trioxide and aluminum isopropoxide.

Particularly useful catalysts are organic metal compounds such as the magnesium, calcium, cerium, barium, zinc, tin, titanium, or other metal salts of organic acids.

It is appropriate to use the catalyst in an amount of 0.0001 to 1.0%, preferably 0.001 to 0.2%, of the total weight of the starting materials.

It is preferable to employ a reaction temperature of about 80°C to 220°C.

A temperature in the vicinity of the boiling point of dialkyl carbonate is employed during the initial stage of the reaction, and as the reactiion proceeds, the temperature is gradually raised.

A reaction vessel having a distillation column is usually employed to enable the separation of the diol compound which is produced, from the dialkyl carbonate employed as the starting material

The reaction is performed while maintaining the dialkyl carbonate under reflux and the alcohol which is produced with the progress of the reaction is removed by distillation.

In the event that a part of the dialkyl carbonate is lost by forming an azeotropic mixture with the alcohol which is removed by distillation, it is advisable to take the amount of any such possible loss of dialkyl carbonate into consideration when weighing the starting materials to be charged into the reaction system.

In view of the above reaction formula n mols of dialkyl carbonate and (n+1) mols of diol compound define their theoretical molar ratio, it is advisable to employ a molar ratio of dialkyl carbonate to diol compound which is 1.1 to 1.3 times greater than their theoretical molar ratio.

Although the reaction may be performed at normal pressure, its progress can be promoted if a reduced pressure in the range of 0,133 to 26,66 kPa (1 to 200 mmHg) is employed during its later stage.

The molecular weight of the polycarbonate diol composition can be adjusted if the molar ratio of the diol compound and the other material, such as dialkyl or dialkylene carbonate, is altered.

In other words, its molecular weight can be adjusted if the value of n in the formula is varied. The structure of the poly carbonatediol composition can be hydrated which can be confirmed by an analysis with gaschromatography or NMR.

The polyurethane resin can be prepared by a reaction of an organic isocyanate compound with the above described polycarbonatediol composition.

The examples the organic diisocyanate compounds are 2,4-tolylene diisocyanate, 2,6-tolylene diisocyanate, 4,4'-diphenylmethane diisocyanate, tolidine diisocyanate, xylene diisocyanate, hydrogenated 4,4'-diphenylmethane diisocyanate, hexamethylene diisocyanate, isophorone diisocyanate, 4,4'-dicyclohexylmethane diisocyanate, 1,5-naphthalene diisocyanate, carbodiimide-modified methylene diisocyanate or xylylene diisocyanate.

One or more compounds are employed.

A chain extender may also be present in the mixture, if required.

A low-molecular compound having active hydrogen can be used as the chain extender.

Specific examples thereof are ethylene glycol, propylene glycol, 1,4-butylene glycol, 2-methylpropanediol, neopentyl glycol, pentane-diol, 1,6-hexanediol, ethylenediamine, propylenediamine, hydrazine, isophoronediamine, metaphenylenediamine, 4,4'-diaminodiphenylmethane, diaminodiphenylsulfone or 3,3'-dichloro-4,4'-diaminodiphenylmethane

The manufacture of polyurethanes can be accomplished either by the prepolymer process in which a polyol and an excess of an organic diisocyanate compound are allowed to react to form a prepolymer having isocyanate group in terminal positions and the prepolymer is allowed to react with a diol diamine as a chain extender, or by the one-shot process in which all of the constituents required for making a polyurethane are added simultaneously.

A solvent may or may not be used for performing any such reaction.

If any solvent is used, it is preferable to use an inert one.

Specific examples of the solvents which can be used are toluene, ethyl acetate, butyl acetate, methyl ethyl ketone, dimethylformamide and tetrahydrofuran.

A catalyst can be employed for promoting the reaction for urethane formation.

It is possible to use as the catalyst, for example, an organic tin compound such as tin octylate or dibutyl-tindilaurate, or a tertiary amine such as N-methylmorpholine or triethyl amine.

The carbonatediol composition and polyurethane resin of the present invention can be hydrolyzed to analyze partial molecular structure, hydrolyzed products by an analysis with gaschromatograph or NMR.

In the following, the present invention is further illustrated by examples.

### [Synthesis Example 1]

A round bottom flask having a capacity of two liters and equipped with a stirrer, a thermometer and a distillation column having 10 perforated plates was charged with 814g (9.04 mols) of dimethylcarbonate, 677g (5.74mols) of 1,6-hexanediol, 149g (1.43 mols) of neopentylglycol and 0.16g of tetrabutyl titanate as a catalyst.

The reaction was performed at normal pressure with the dimethylcarbonate being boiled, and the resulting methanol was removed by distillation.

The temperature of the reaction vessel was gradually raised to 200°C and when the formation of methanol stopped substantially completely, the evacuation of the vessel was started until a reduced pressure of 20 mmHg was ultimately reached, whereby the raw materials were removed by distillation and a reaction product was obtained.

The obtained polycarbonatediol composition was a wax having a hydroxyl number of 56.8 and a melting point of 22 to 25°C.

### [Synthesis Example 2]

Synthesis example 1 was repeated, except that the molar ratio of 1,6-hexanediol to neopentylglycol was changed from 4/1 to 2/1.

### [Synthesis Example 3]

Synthesis example 2 was repeated, except that neopentylglycol was replaced to 3-methyl-1,5-pentanediol.

### [Synthesis Example 4]

Synthesis example 1 was repeated, except that neopentylglycol was replaced to trimethyl-1,6-hexanediol.

### [Synthesis Example 5]

Synthesis example 2 was repeated, except that neopentylglycol was replaced to trimethyl-1,6-hexanediol.

### [Synthesis Example 6]

Synthesis example 2 was repeated, except that neopentylglycol was replaced to 3-methyl-1,5-pentanediol and schemed molecular weight of the polycarbonatediol composition was changed from 2000 to 1000.

### [Synthesis Example 7]

Synthesis example 3 was repeated, except that a schemed molecular weight of the polycarbonatediol composition was changed from 2000 to 800.

### [Synthesis Example 8]

Synthesis example 3 was repeated, except that a schemed molecular weight of the polycarbonatediol composition was changed from 2000 to 500.

### [Comparative Synthesis Example 1]

Synthesis example 1 was repeated, except that a mixture consisting of 1,6-hexanediol and neopentylglycol was replaced to only 1,6-hexanediol.

### [Comparative Synthesis Example 2]

Comparative synthesis example 1 was repeated, except that a schemed molecular weight of the polycarbonatediol composition was changed from 2000 to 1000.

The results obtained in Synthesis Example 1 to 8 and Comparative Synthesis Example 1 and 2 are shown in Table 1.

Table 1 indicates that polycarbonatediol compositions according to the present invention are solid having a low melting range of from 22 to 25°C or liquid at the temperature of 15°C, whereas the ones according to Comparative Synthesis Examples are solids having a melting range of from 43 to 50°C.

Furthermore, the schemed molecular weights of the polycarbonatediol composition nearly agreed with the ones calculated based on hydroxyl values.

The carbonatediol compositions obtained in Synthesis Example 1, 6 and 8 were hydrolyzed.

The hydrolyzed products were analyzed with NMR analyzer and gaschromatograph to confirm the components of the carbonatediol compositions, which were copolymerized by 2 kinds of aliphatic diols.

**Table 1**

| Synthesis Example | | | | | | | | | Comparative Synthesis Example | |
|---|---|---|---|---|---|---|---|---|---|---|
| | 1 | 2 | 3 | 4 | 5 | 6 | 7 | 8 | 1 | 2 |
| (A) | NPG | NPG | MPD | TMHD | TMHD | MPD | MPD | MPD | - | - |
| (B) | 2000 | 2000 | 2000 | 2000 | 2000 | 1000 | 800 | 500 | 2000 | 1000 |
| (C) | 4/1 | 2/1 | 2/1 | 4/1 | 2/1 | 2/1 | 2/1 | 2/1 | - | - |
| (D) | 56.8 | 60.9 | 56.9 | 57.4 | 53.6 | 112.1 | 141.5 | 227.2 | 57.8 | 110.5 |
| (E) | 5360 | 5020 | 5010 | 5390 | 6980 | 820 | 480 | 180 | 5760 | 840 |
| (F) | 22∼25 | - | - | - | - | - | - | - | 48∼50 | 43∼45 |
| (G) | wax | liquid | liquid | liquid | liquid | liquid | liquid | liquid | wax | wax |
| (A): diol having side chain (B): schemed molecular weight (C): molar ratio of 1,6-hexanediol to (A) (D): hydroxyl value (E): viscosity (cp/60°C) (F): melting point (°C) (G): appearance | | | | | | | | | | |
| NPG:neopentylglycol MPD:3-methyl-1,5-pentanediol TMHD:trimethyl-1,6-hexanediol | | | | | | | | | | |

### [Example 1 to 2]

Polyurethane resins were synthesized from the polycarbonatediol compositions which had been prepared in Synthesis Example 1, 2 and Comparative Synthesis Example 1 respectively under the reaction conditions which will hereinafter be stated.

A polyurethane film having a thickness of 150 µm was formed from each polyurethane resins and examined for physical properties.

### [Reaction Conditions for the Synthesis of Polyurethane resins]

### (1) Component:

| | |
|---|---|
| Polyol | 100 parts |
| 1,4-BG | 8.3 parts |
| MDI | 35.6 parts |
| Solvent (DMF) | 267.3 parts |
| (Note) Polyol (Mw2000)/1,4-BG/MDI NCO/OH=1.03 1,4-BG/polyol=2.0 | |

### (2) Cooking Schedule:

A reaction vessel was charged with 100 parts of polyol, 8.3 parts of 1,4-BG and 144 parts of solvent and heated to a temperature of 60°C.

Then, the vessel was charged with 35. 6 parts of MDI and further heated.

When the temperature had dropped to 60°C, the vessel was additionally charged with 123.3 parts of solvent and aging was allowed to take place at that temperature.

### (3) Properties of Polyurethane resins:

| | |
|---|---|
| NV (%) = | 35 |
| Viscosity (cp at 25°C) = | 60,000 to 80,000 |
| Solvent = | DMF |

### (4) Formation of Film:

A polyurethane resin solution was coated onto a sheet of release paper and dried to form a film having a thickness of 150 µm (microns).

### (5) Examination of Physical Properties:

JIS #3 dumbbell specimens were formed from each film and were examined for physical properties by a Shimadzu autograph.

The results obtained in Example 1 to 2 and Comparative Example are shown in Table 2.

Table 2 indicates that polyurethane resins synthesized according to the invented polycarbonatediol compositions are more excellent in modulus at low temperature than prior one.

**Table 2**

| | Example 1 | Example 2 | Comparative Example |
|---|---|---|---|
| 100%modulus (kgf/cm²) | 63 | 92 | 69 |
| 300%modulus (kgf/cm²) | 205 | 574 | 410 |
| strength (kgf/cm²) | 622 | 653 | 652 |
| elongation (%) | 445 | 330 | 400 |
| 100%modulus at -10°C (kgf/cm²) | 114 | 490 | 113 |
| 300%modulus at -10°C (kgf/cm²) | 508 | - | 550 |
| 100%modulus at -30°C (kgf/cm²) | 419 | 580 | 403 |

## Claims

1. A polycarbonatediol composition obtainable by reacting an aliphatic diol with an organic carbonate to form a carbonate moiety, characterized in that the aliphatic diol comprises a mixture of:
(i) 20-33.3% by mole of at least one diol having a main chain including 3 to 20 carbon atoms and including at least one side chain, with the exception of 2-methyl-1,8-octanediol, and
(ii) 80-66.7% by mole of 1,6-hexanediol.

2. A polycarbonatediol composition according to claim 1, wherein the organic carbonate is selected from an alkylene carbonate, a diaryl carbonate and a dialkyl carbonate.

3. A polycarbonatediol composition according to claim 1 or 2, wherein the diol is neopentylglycol.

4. A polycarbonatediol composition according to claim 1 or 2, wherein the diol is trimethyl 1,6-hexanediol.

5. A polycarbonatediol composition according to claim 1 or 2, wherein the diol is 3-methyl-1,5-pentanediol.

6. A polycarbonatediol composition according to any preceding claim, wherein the mixing ratio of 1,6-hexanediol to the diol is about 4:1.

7. A polycarbonatediol composition according to any claims 1 to 5, wherein the mixing ratio of 1,6-hexanediol to the diol is about 2:1.

8. A polyurethane resin obtainable by reacting an organic diisocyanate compound with a polycarbonatediol composition according to any preceding claim.

## Patentansprüche

1. Polycarbonatdiol-Zusammensetzung, erhältlich durch Reaktion eines aliphatischen Diols mit einem organischen Carbonat, zur Bildung eines Carbonat-Anteils,
dadurch **gekennzeichnet**,
daß das aliphatische Diol eine Mischung aus
(i) 20 bis 33,3 Mol.-% von zumindest einem Diol mit einer Hauptkette, umfassend 3 bis 20 Kohlenstoffatome und zumindest eine Seitenkette, mit der Ausnahme von 2-Methyl-1,8-octandiol, und
(ii) 80 bis 66,7 Mol.-% 1,6-Hexandiol umfaßt.

2. Polycarbonatdiol-Zusammensetzung nach Anspruch 1, worin das organische Carbonat ausgewählt aus einem Alkylencarbonat, einem Diarylcarbonat und einem Dialkylcarbonat.

3. Polycarbonatdiol-Zusammensetzung nach Anspruch 1 oder 2, worin das Diol Neopentylglykol ist.

4. Polycarbonatdiol-Zusammensetzung nach Anspruch 1 oder 2, worin das Diol Trimethyl-1,6-hexandiol ist.

5. Polycarbonatdiol-Zusammensetzung nach Anspruch 1 oder 2, worin das Diol 3-Methyl-1,5-pentandiol ist.

6. Polycarbonatdiol-zusammensetzung nach einem der vorhergehenden Ansprüche, worin das Mischungsverhältnis von 1,6-Hexandiol zu dem Diol etwa 4:1 ist.

7. Polycarbonatdiol-Zusammensetzung nach einem der Ansprüche 1 bis 5, worin das Mischungsverhältnis von 1,6-Hexandiol zu dem Diol etwa 2:1 ist.

8. Polyurethanharz, erhältlich durch Reaktion einer organischen Diisocyanat-Verbindung mit einer polycarbonatdiol-zusammensetzung nach einem der vorhergehenden Ansprüche.

## Revendications

1. Composition de poly(carbonate de diol) qu'on peut obtenir en faisant réagir un diol aliphatique avec un carbonate organique pour former un radical carbonate, caractérisée en ce que le diol aliphatique comprend un mélange de :
(i) 20-33,3 % molaires d'au moins un diol ayant une chaîne principale comprenant 3 à 20 atomes de carbone et comprenant au moins une chaîne latérale, à l'exception du 2-méthyl-1,8-octanediol et
(ii) 80-66,7 % molaires de 1,6-hexanediol.

2. Composition de poly(carbonate de diol) selon la revendication 1, où on choisit le carbonate organique parmi un carbonate d'alkylène, un carbonate de diaryle et un carbonate de dialkyle.

3. Composition de poly(carbonate de diol) selon la revendication 1 ou 2, où le diol est le néopentylglycol.

4. Composition de poly(carbonate de diol) selon la revendication 1 ou 2, où le diol est le triméthyl-1,6-hexanediol.

5. Composition de poly(carbonate de diol) selon la revendication 1 ou 2, où le diol est le 3-méthyl-1,5-pentanediol.

6. Composition de poly(carbonate de diol) selon l'une quelconque des revendications précédentes, où le rapport de mélange du 1,6-hexanediol au diol est d'environ 4:1.

7. Composition de poly(carbonate de diol) selon l'une quelconque des revendications 1 à 5, où le rapport de mélange du 1,6-hexanediol au diol est d'environ 2:1.

8. Résine de polyuréthane qu'on peut obtenir en faisant réagir un composé diisocyanate organique avec une composition de poly(carbonate de diol) selon l'une quelconque des revendications précédentes.
